# EUROPEAN PATENT APPLICATION

(11) **EP 2 298 840 A1**
(43) Date of publication of application: **23.03.2011**
(21) Application number: 10173692.4
(22) Date of filing: 23.08.2010
(51) Int. Cl.: C09D 5/00, C09D 127/12, C09D 183/04

(54) **Coating of metallic articles to restrict ice accumulation**

(30) Priority: 22.09.2009 GB 0916597
(71) Applicant: Rolls-Royce plc, London SW1E 6AT (GB)
(72) Inventor: Lambourne, Alexis, Belper, Derbyshire DE56 0NR (GB); Clark, Daniel Nathan Stuckey, Derby, Derbyshire DE23 1XP (GB)
(74) Representative: Gee, Philip David

(57) **Abstract**

An anti-icing coated metallic substrate includes molecules of an anti-icing material chemically bonded to the metallic substrate.

The substrate is suitably a metallic article, particularly a high-performance weight-critical rotor component such as an aircraft propeller blade or an air intake fan blade of a gas turbine engine.

## Description

The present invention relates to coating of metallic articles to restrict ice accumulation.

Such metallic articles include all metal structures exposed to water-freezing conditions, particularly but not exclusively rotor components such as wind-turbine blades, aircraft propeller blades or air intake fan blades of gas turbine engines.

Ice accumulation on the surface of an aircraft propeller blade or an air intake fan blade of a gas turbine engine, or other metallic article, can cause serious problems. As ice builds up on a rotating article, a point is reached when the ice-surface bonding strength is insufficient to withstand the centrifugal load on the accreted mass of ice, which then sling-shots off and may cause significant impact damage.

Ice accretion on other rotor or static metallic structures increases the weight on the structure and leads to loss of efficiency and the risk of mechanical damage or failure.

A range of precautionary measures are taken to minimise these problems. These include heating of metallic parts to prevent icing, and the use of high impact strength materials in the vicinity of rotating parts at risk of ice accumulation. However, these solutions increase manufacturing costs through the need for additional components and more expensive materials. In the aircraft industry in particular, they increase running costs of the aircraft through additional energy consumption through heating and additional weight.

A number of anti-icing paints or resins have been devised, in which anti-icing materials are entrained in a paint or resin carrier system. For examples of such paints or resins see S Kimura et al, "A New Surface Coating for Prevention of Icing on Airfoils", SAE International, 2007; Wang et al, "Fabrication and anti-frosting performance of super hydrophobic coating based on modified nano-sized calcium carbonate and ordinary polyacrylate", Applied Surface Science 253, 2007, pages 8818-8824, the contents of which are incorporated herein by reference in all relevant respects.

However, such paints or resins would not be effective for rotor components, as the adhesive force to the surface of the metallic substrate is insufficient and the additional weight and uneven weight distribution would adversely affect the performance and economics of the equipment. Hitherto, no effective anti-icing coating for rotor components, particularly high-performance weight-critical rotor components such as aircraft propeller blades or air intake fan blades of gas turbine engines has been published.

The present invention aims to overcome these problems or some of them, or at least to provide an acceptable alternative to conventional anti-icing coating technology.

The present invention provides in a first aspect an anti-icing coated metallic substrate in which molecules of an anti-icing material are chemically bonded to the metallic substrate.

The substrate is suitably formed as, or as part of, a metallic article, for example a rotor component, particularly a high-performance weight-critical rotor component such as an aircraft propeller blade or an air intake fan blade of a gas turbine engine.

In a second aspect the present invention provides a method of manufacturing an anti-icing coated metallic substrate according to the first aspect of the invention, which comprises bonding an anti-icing material to a metallic substrate surface so that molecules of the anti-icing material are chemically bonded to the metallic substrate.

In this method, the metallic substrate surface is suitably pre-treated to create a nanoscale roughness before bonding the anti-icing material to it.

The chemical bonding of molecules of the anti-icing material to the metallic substrate may suitably involve covalent bonds or chemisorption bonds or both. Ionic bonding will in general be disfavoured because of the aqueous environment in which the coating is to operate. The expression "chemisorption" used herein refers to an adsorbed system where the chemical bonding between the adsorbate and the substrate is stronger than physisorption forces of attachment and may, for example, involve more than about 0.5 eV of binding energy per atom or molecule. The covalent or chemisorption bonds or both may bond molecules of the anti-icing material to the metallic substrate directly. Alternatively or additionally, the covalent or chemisorption bonds or both may bond molecules of the anti-icing material to intermediate species which is/are attached to the metallic substrate. The attachment of the intermediate species to the metallic substrate may, for example, itself involve chemical bonds or chemisorption bonds or both.

Examples of such intermediate species can include inorganic molecules comprising atoms of the metal of the substrate. Such molecules can suitably be formed *in situ* on the surface of the metallic substrate by known chemical reactions, such as passivation reactions (eg oxidation, nitridation, carbidation). The formation of such intermediate species may typically serve to create nanoscale roughness for the optional pre-treatment of the metallic substrate surface prior to the coating method according to the second aspect of the present invention.

Oxidation, nitridation or carbidation of metallic substrates are well known processes in this art. It is preferred that a thin film of a metal oxide, nitride or carbide is formed in situ on the surface of the metal. For example, a thin film of titanium oxide, nitride or carbide can be formed by physical vapor deposition (PVD, usually sputter deposition, cathodic arc deposition or electron beam heating) or chemical vapor deposition (CVD) or by a sol-gel process.

Alternatively, nanoscale roughness for the optional pre-treatment of the metallic substrate surface prior to the coating method according to the second aspect of the present invention may be created by differential etching of a crystalline grain structure of the metallic substrate in known manner.

Nanoscale roughness is known to enhance superhydrophobicity of surfaces. See, for example, Y Wu et al, "Nanoscale Roughness Inducing Super-Water-Repellency: From Natural to Artificial", published by Materials Research Society, Paper # H6.35 (http://www.mrs.org/s_mrs/sec_subscribe.asp?CID=2623&DID=116361&action=detail), the contents of which are incorporated herein by reference in all relevant respects.
The expression "nanoscale roughness" herein is used in the conventional sense as defined in "Light Scattering and Nanoscale Surface Roughness", 2007, Ed. A A Maradudin, Pub. Springer (ISBN 0-387-25580-X), the contents of which are incorporated herein by reference in all relevant respects.

In more detail, as set out in Chapter 1 of the Maradudin publication, a surface having "nanoscale roughness" generally has heights of surface features above and below the mean surface level ("surface roughness"), given in terms of a root-mean-square (rms) value or an average value, in the range from about 0.01 nm to larger than about 1,000nm, for example up to about 5,000nm, but less than the millimetre size (1,000,000 nm). Surface spatial wavelengths of a surface having nanoscale roughness generally lie in the range from about 100nm to about 1,000,000nm, depending on the mutual spacing of the peaks. Nanoscale roughness may be measured using conventional techniques and apparatus, for example atomic force microscopy (AFM).

In all aspects of the present invention, physical bonding of molecules of the anti-icing material to the metallic substrate, for example by bonding of a paint or resin matrix, entraining the anti-icing material, to the metallic substrate, is preferably absent or- if present - provides a secondary bonding means to the chemical bonding system.

The chemical bonding of molecules of the anti-icing material to the metallic substrate preferably bonds the majority of the anti-icing coating area to the metallic substrate.

The present invention makes available for the first time the possibility of coating an aircraft propeller blade or an air intake fan blade of a gas turbine engine with an anti-icing material.

Therefore, in a third aspect the present invention provides the use of an anti-icing material as an anti-icing coating of an aircraft propeller blade or an air intake fan blade of a gas turbine engine.

Any preference or exemplification, and all combinations thereof, stated for one aspect of the present invention applies equally to each and every other aspect of the invention. In particular, but not exclusively, the preferences and exemplification of the materials and methods for constructing the anti-icing coated metallic substrate apply equally to the structure of the finished anti-icing coated metallic substrate itself and metallic articles, for example an aircraft propeller blade or an air intake fan blade of a gas turbine engine which comprise the anti-icing coated metallic substrate.

The anti-icing material is suitably selected from all compounds and compositions which serve in use to restrict the accumulation of ice on the metallic substrate. Examples of such materials include hydrophobic polymers such as hydrocarbons (for example, polyethylene), halogenated (eg fluorinated) compounds (for example fluorocarbons such as polytetrafluoroethylene (PTFE, Teflon™) or halogenated hydrocarbons), silicone polymers, compositions comprising these materials, and any combination thereof. The polymers may have freezing point (or melting point) depressing properties on water that contacts them. Further examples of potentially suitable materials are given by P Roach et al in "Progress in Superhydrophobic Surface Development", Soft Matter, 2008, the contents of which are incorporated herein by reference in all relevant respects.

The metallic substrate used in the present invention may suitably comprise a titanium-based alloy and is suitably of relatively low density, for example less than about 7 gcm⁻³, less than about 6 gcm⁻³, or less than about 5 gcm⁻³. The metallic substrate suitably has a relatively high melting point or melting range. For example, the melting point or midpoint of the melting range may suitably be above about 1000°C, for example above about 1300°C, for example above about 1400°C, for example above about 1500°C.

The titanium alloy comprises titanium as the main component and any other suitable metal or metals as a further component or further components. It will be appreciated that the alloy may also comprise semi- and non-metallic components in addition to metallic components. These semi- and non-metallic components may typically be present in lower amounts than the main metallic component(s), for example less than about 5% by weight, less than about 3% by weight or less than about 1 % by weight.

The alloy comprises titanium as the main component and preferably one or more subsidiary components selected from aluminium, beryllium, bismuth, chromium, cobalt, gallium, hafnium, iron, manganese, molybdenum, niobium, nickel, oxygen, rhenium, tantalum, tin, tungsten, vanadium or zirconium. The alloy may also suitably comprise one or more semi- or non-metallic elements selected from boron, carbon, silicon, phosphorous, arsenic, selenium, antimony and tellurium. These elements may serve to increase the oxidation, creep or burning resistance of the alloy.

Titanium may be present in such a titanium alloy in an amount greater than about 40% by weight, for example greater than about 50% by weight, greater than about 60% by weight or greater than about 70% by weight. In some embodiments titanium may be present in an amount greater than about 80% by weight.

Where the metal substrate is a titanium alloy substrate comprising an aerospace component or portion thereof, the component is preferably a component of an aero-engine which in use may be exposed to conditions of relatively high temperature (eg above about 400°C, particularly above about 650°C), eg casings, compressor drums, vanes, discs, blades, shafts, plugs or nozzles. Particularly preferred components include fan blades.

For example, other components of gas turbine engines on which ice may accumulate include the variable inlet guide vanes and outlet guide vanes. Although these components are static and the ice shedding mechanism differs in that it is driven primarily by aerodynamic loading and vibration rather than by centrifugal force, it will be readily apparent to those skilled in the art that the present invention could nevertheless be used on such components in conjunction with conventional electrical, mechanical or hot air deicing systems to promote more rapid ice de-bonding and shedding.

The present invention will now be described by reference, and without limitation, to the following Example and the accompanying drawings, wherein:
Figure 1 shows a front view of a test sheet of an aerospace titanium alloy 6-4 (Ti-6AI-4V) after hydrophobic coating according to the present invention and then subjected to an ice accretion test;
Figure 2 shows a side view of the test sheet of Figure 1, illustrating the ice formations;
Figure 3 shows a front view of a comparison untreated sheet of titanium alloy 6-4 after hydrophobic coating according to the present invention and then subjected to the same ice accretion test as for the material of Figures 1 and 2; and
Figure 4 shows a side view of the test sheet of Figure 2, illustrating the ice formations.

### Example

A substrate of Titanium 6-4 alloy was surface treated by oxidation and surface coated with the hydrophobic coating in accordance with the present invention.

First, a layer of titanium oxide was deposited on the substrate by a known sol-gel process. Then, a hydrophobic coating of HIREC 1450 was applied on top of the titanium oxide layer. HIREC 1450 is a commercially available product, and is applied by aerosol. The coating thickness is about 15µm.

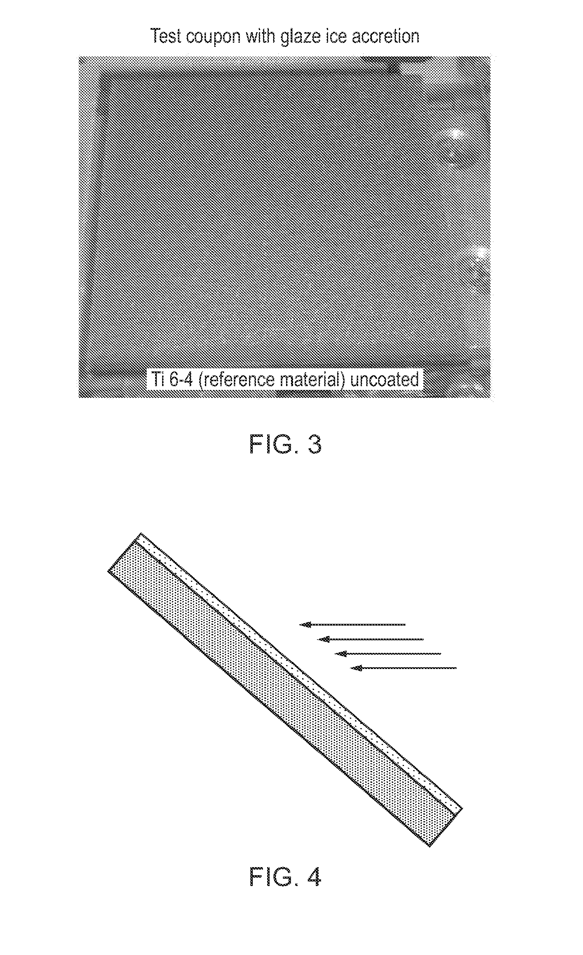

The coated substrate was subjected to icing conditions and was found to be particularly effective at reducing ice adhesion compared to the uncoated metal substrate. Without the coating of the present invention, ice typically accumulates substantially uniformly on a substrate (see Figure 3) to form one smooth, homogenous coating of glaze ice (see Figure 4).

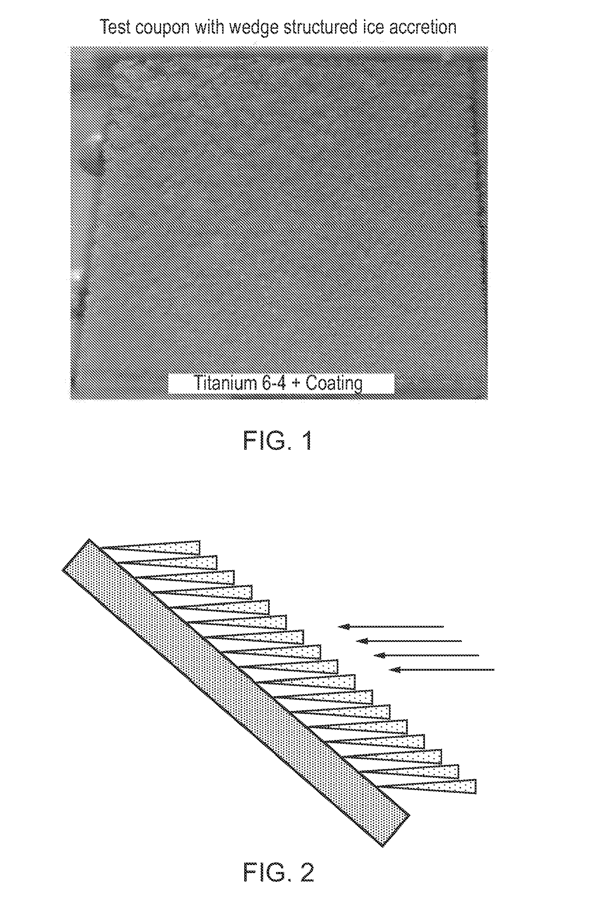

However, ice formation on a substrate comprising a coating in accordance with the present invention (see Figure 1) exhibits a substantially different morphology, with ice accumulating as rime ice in discrete wedges. The wedge-shaped ice growths each have a small foot-print attaching each wedge to the substrate coating (see Figure 2).

The morphology of the ice, following treatment according to the present invention, results in a weaker ice-substrate bond and promotes more regular and more predictable ice shedding, at lower accretion masses.

The present invention therefore provides an improved or at least alternative method for reducing ice adhesion on metal substrates, particularly but not exclusively titanium alloy aerospace components.

The foregoing broadly describes the present invention, without limitation. Variations and modifications as will be readily apparent to those skilled in this art are intended to be included within the scope of the present invention as defined in and by the appended claims.

## Claims

1. An anti-icing coated metallic substrate in which molecules of an anti-icing material are chemically bonded to the metallic substrate.

2. An anti-icing coated metallic substrate according to claim 1, wherein the chemical bonding is via covalent or chemisorption bonds or both, which bond molecules of the anti-icing material to the metallic substrate or to intermediate species attached to the metallic substrate.

3. An anti-icing coated metallic substrate according to claim 2, wherein the intermediate species is the product of a passivation reaction on the surface of the metal substrate.

4. An anti-icing coated metallic substrate according to claim 2 or claim 3, wherein the intermediate species is an oxide, nitride or carbide of the metallic substrate.

5. An anti-icing coated metallic substrate according to any one of the preceding claims, wherein the coated metallic substrate surface has a nanoscale roughness.

6. An anti-icing coated metallic substrate according to any one of the preceding claims, wherein the anti-icing material is a hydrophobic polymer selected from hydrocarbons, halogenated hydrocarbons, fluorocarbons, silicone polymers, compositions comprising these materials, and any combination thereof.

7. An anti-icing coated metallic substrate according to any one of the preceding claims, wherein the metallic substrate is a titanium-based alloy substrate.

8. A rotor component comprising an anti-icing coated metallic substrate according to any one of the preceding claims.

9. A rotor component according to claim 7, which is an aircraft propeller blade or an air intake fan blade of a gas turbine engine.

10. A method of manufacturing an anti-icing coated metallic substrate according to any one of claims 1 to 7, which comprises bonding an anti-icing material to a metallic substrate surface so that molecules of the anti-icing material are chemically bonded to the metallic substrate.

11. A method according to claim 10, wherein the metallic substrate surface is pre-treated to create a nanoscale roughness before bonding the anti-icing material to it.

12. A method according to claim 10 or claim 11, wherein the metallic substrate surface is pre-treated to form intermediate species *in situ* on the surface of the metallic substrate, to which the molecules of the anti-icing material bond.

13. A method according to any one of claims 10 to 12, wherein the metallic substrate is a rotor component and the method is for manufacturing an anti-icing coated rotor component.

14. A method according to claim 13, wherein the metallic substrate is an aircraft propeller blade or an air intake fan blade of a gas turbine engine.
